Europäisches Patentamt

European Patent Office

Office européen des brevets

(11) Publication number: **0 223 592**
**A2**

## EUROPEAN PATENT APPLICATION

(21) Application number: **86308988.4**

(22) Date of filing: **18.11.86**

(51) Int. Cl.⁴: **C 04 B 24/28**

(30) Priority: **19.11.85 US 799409**

(43) Date of publication of application: **27.05.87**
**Bulletin 87/22**

(84) Designated Contracting States: **DE ES FR GB IT SE**

(71) Applicant: **Lin, Cheng-Chong, No. 4, Lane 41, Shin-Sen North Road, Taipei (TW)**
Applicant: **Mao, Chen-Chi, No. 20, Lane 421 Sec. 2 Chihshan Road Shin Lin District, Taipei (TW)**

(72) Inventor: **Lin, Cheng-Chong, No. 4, Lane 41 Shin-Sen North Road, Taipei (TW)**

(74) Representative: **Goldin, Douglas Michael et al, J.A. KEMP & CO. 14, South Square Gray's Inn, London WC1R 5EU (GB)**

(54) Polymer containing concrete and concrete-like compositions.

(57) Thermosetting polymer containing concrete compositions which exhibit plastic-like properties are formed by admixing an aqueous polymer containing latex emulsion together with a water binding substance and a catalyst. The latex is comprised of a thermosetting unsaturated polyester resin suspended in water containing an emulsifier. The water binding substance and the catalyst are combined to form a hydraulic material prior to mixture with the latex. Upon mixing of the latex and hydraulic material, the catalyst polymerizes (crosslinks) the resin and the water of the latex hydrates the water binding substance such that a formable paste-like concrete composition is formed. The concrete may then be cured and set into any desired shape.

POLYMER CONTAINING CONCRETE AND CONCRETE-LIKE COMPOSITIONS

This invention relates to new and novel concrete compositions. More specifically this invention relates to compositions and a method of manufacture of a polymer containing concrete, the concrete being formed by mixing a hydraulic material before hydration thereof with a latex containing a thermosetting polymer.

Cement, gypsum plaster, lime and the like are all hydraulic materials which may be mixed with water of hydration and optionally aggregate (i.e. gravel, sand, etc.) to form concrete for use in the construction of buildings and other structures. Concrete so formed performs well when exposed to compressive forces; however the concrete is brittle and has low tensile strength.

Research efforts devoted to overcome the limitations of standard concretes have led to the development of new types of concrete materials, such as fiber-reinforced concrete, expansive cement concrete, and polymer containing concrete. Some remarkable results have been attained with these approaches, but invariably their disadvantages as to processing methods or economics outweigh their advantages of improved strength.

One type of polymer containing concrete material developed to overcoming the above-described limitations is a latex-modified concrete which is formed by incorporating a polymer latex into a mix of cement. The polymers typically used in the latex have been thermoplastic resins such as Saran resin, acrylics, polyvinyl acetate and the like. The thermoplastic resins appear to augment the binding of the aggregate component of the concrete along with the cement, thereby forming a stronger concrete.

It has been found that if the thermoplastic polymer resins are replaced with a thermosetting polymer resin, even stronger inter-aggregate bonding is formed; however, the polymerization of the thermosetting resins used to date have been found to interfere with the hydration of the cement mix in the concrete and conversely the water of hydration of the concrete may interfere with the curing of the thermosetting resin.

The polymer containing concretes known in the art are formed by mixing a hydraulic cement and water and then introducing the polymer into this mixture. The polymer may be a thermoplastic resin, or a thermosetting resin together with a catalyst. The addition of the polymer and related material constitutes an additional step in forming of concrete and since this step will typically be preformed at the site or factory where the concrete is to be used, the concrete forming process becomes more complex.

It is therefore an object of the present invention to provide a latex containing a thermosetting polymer for use in forming concrete of increased strength and resistance to attack.

It is another object of the invention to provide a hydraulic material suitable for use with a latex containing a thermosetting polymer for forming new and improved concrete materials.

It is yet another object of the invention to provide a concrete material containing a thermosetting polymer which may be processed using known plastic processing techniques.

It is still another object of the invention to provide a method for forming such a polymer-containing concrete which is compatible to use in accordance with the standard concrete forming processes.

In accordance with the present invention a polymer containing concrete is formed by admixing a latex containing polyester resin together with a water-binding material and a catalyst. This concrete may be handled as a typical concrete i.e. poured into the area of use, troweled and allowed to set or extruded, molded or otherwise handled in a plastic-like manner and formed into any desired shape.

The latex of the present invention is comprised of an aqueous emulsion of a thermosetting resin. In addition, the latex may also comprises effective amounts of emulsifiers and stabilizers, as well as an accelerator, which operates in combination with the catalyst to crosslink and cure the resin into a three-dimensional matrix.

The water binding materials useful in the invention are any of the known substance which have the ability to form solid, essentially insoluble bonded aggregations upon hydration.

The catalyst may be any suitable free radical generator which will initiate the polymerization (i.e. crosslinking) of the thermosetting resin such as a polyester when the latex, water binding substance, and catalyst are combined. The catalyst may be added to the concrete compositions of the present invention as a separate component either during or after the combining of the latex and hydraulic material, however, the catalyst is preferably admixed with the water-binding substance to form a composite hydraulic material which may be combined with the latex.

The latex and the hydraulic material (or the water binding substance and the catalyst) are combined in measured amounts to form concrete and concrete like composition, in a manner similar to that known in the art for mixing standard concrete materials. Upon mixing, the catalyst, in combination with the accelerators in the latex, causes the polymer resin contained in the latex to commence to cure. In addition, the water commences to hydrate the hydraulic substance in a manner well known in the art to form the solid concrete.

The concrete although when first formed is paste-like in nature, will set in a relatively short amount of time. The concrete can set in approximately 5-60 minutes, depending upon the curing temperature and the concentration of the various components. Accordingly the concrete can be troweled in the known manner. In addition, the concrete may be extruded, compression molded, injection molded, callendered, or otherwise handled in a plastic-like manner. The resulting hardened structures exhibit improved strength (both compressive and tensile) and flexibility in addition the structures can have a smooth, non-porous, fine finish (depending upon the size and type of aggregate used, if any is in fact used), heretofore not found in polymer containing concretes. In addition, the concrete structures are waterproof and chemical resistant.

In addition to the above components, the concrete may additionally comprise aggregate material, fiber reinforcement, filler materials and the like. These materials serve to improve and/or alter the characteristics of the hydraulic paste and resulting concrete and are selected as determined by the particular application to which the polymer containing concrete compositions of the invention are to be put.

In the present invention, polymer containing concrete compositions are provided which comprise a new type of cementitious shaping material with high grade quality and fine appearance and which may be troweled by hand or may be extruded, compression molded, injection molded, callendered or otherwise treated as a plastic-like material. The compositions are formed by procedures typically employed in mixing regular concrete except that a special latex material replaces the water component which is mixed with hydraulic material to hydrate the same.

The latex of the present invention contains a thermosetting unsaturated polyester resin. The polymer resin which is typically a liquid before curing is dispersed in water in a w/o type emulsion forming droplets having a diameter of between approximately 2 and 5 microns. The latex may contain effective amounts (i.e. 0.2 to 4 wt.%) of a suitable emulsifier or surfactant such as Span 80 surfactant which is available from ICI, Inc. of the United States. The surfactant stabilizes the emulsion and may also contain an accelerator which will be discussed in more detail below. The latex may further comprise thickening agents if desired.

The hydraulic material is comprised of a water binding substance, preferably admixed with an effective amount of a catalyst. The catalyst causes the resin to crosslink into a three dimensional matrix upon mixing of the latex and the hydraulic material, however, as described above, the catalyst may be added to the latex/water binding substance mixture either at the same time or after the latex and hydraulic material are combined. While the following description of the invention is directed to the use of the hydraulic material (the mixture of catalyst/water binding substances), the description is equally applicable to the embodiment in which the catalyst is added as a separate component.

The latex and hydraulic material are mixed together in any suitable method known in the art. The preferred method may be carried out by employing a standard cement mixer such as is used in most construction sites. For example, an Auger Mixer Model No. 712 supplied by Acrison, Inc., New Jersey, can provide suitable results. The latex and the hydraulic material are typically formed prior to delivery to the place of use and are then combined as described above "on site." Therefore, the use of the compositions of the present invention, unlike the known polymer-containing concretes, does not typically require any material change in the normal concrete forming process.

Upon mixing of the latex and hydraulic material, both the hydration of the concrete by the water and the polymerization (crosslinking) and curing of the polymer resin present in the latex is commenced. It should be noted that the polymerization is triggered by the catalyst and if the catalyst is added as a separate component, the polymerization will not commence until the catalyst is in fact added. One of the unforeseen results of the present invention is that the curing of the polymer resin does not interfere with the hydration of the concrete. It is believed that the reason for this is that the compatability of the resin and the water used in the latex.

Since both reactions are exothermic, the temperature of the mixture may commence to increase during the mixing step. Accordingly, care must be taken to insure that this temperature rise does not cause the mixture to cure and set prematurely. If the mixing temperature is maintained at room levels, curing and setting of the cement paste will occur in approximately 20 to 60 minutes; however, if the mixing temperature is maintained at 80°C or higher, curing and setting of the mixture in approximately five minutes or less can be achieved.

The relationship between percentage of water in the latex and final strength of finished product has been found to be a factor in the invention. In addition, the workability and ease of processing of the concrete compositions of the invention have been found to be a function of the concentration of the various components being used. For example, if an excessive amount of water is used in the latex, the strength of the resulting concrete is decreased; insufficient water results in a paste which is difficult to work.

The water to resin ratio found useful in the present invention may range from about 0.1:1 to about 1:1 by weight with ratios ranging from about 0.2:1 to about 0.9:1 by weight being preferred. The ratio of water binding substance to latex preferred in the present invention ranges from about 1:1 to about 2:1. It has been observed, however, that a ratio of 1.5:1 results in the most optimal concrete strength. The strength of a concrete formed in accordance with the present invention was found to increase with the concentration of the water binding substance up to a hydraulic material to latex ratio of 1.5:1; however, above this level little increase in strength was seen.

In addition to the latex and hydraulic material the compositions of the present invention preferably contain aggregate material. With the addition of the aggregate the concrete compositions of the present invention are preferably one (1) part water binding material, from about .2 to about 1 parts latex, and from about 0.5 to about 8 parts aggregate.

The term unsaturated polyester resin as used herein refers to a solution of an unsaturated linear polyester polymer in a liquid monomer, the monomer being adapted to crosslinking the polyester. The unsaturated polyester resins useful in the present invention are those comprised of an unsaturated linear polyester polymer admixed with a vinyl monomer with the resin having a Brookfield viscosity (measured at $25^{\circ}$C) of from about 50 to about 1500 centipoise, but preferably having a viscosity of 50 to 500 centipoise and a specific gravity of about 1.1 to about 1.4. The vinyl monomer useful in the present invention include styrene, acrylonitrile, methyl methacrylate, vinyl acetate, methacrylic acid, vinyl toluene, acrylic acid, divinyl benzene and mixtures thereof with styrene and methylmethacrylate being preferred. The monomers, which are liquid, function as a solvent and a crosslinking agent for the polymer. The polymer to monomer ratio preferred in the present invention is approximately 1:0.5 to about 1:2 by weight. A suitable commercially available polyester resin is Polylite® polyester resin Product No. 33-072 supplied by Reichhold Chemical, Inc., White Plains, New York. This particular resin has a Brookfield viscosity (at $25^{\circ}$C) of about 300-400 centipoise and a specific gravity of between 1.10 to about 1.11.

The production of unsaturated polyester resins is well known in the art. Such resins are formed by reacting polyfunctional acids with polyfunctional alcohols with the acid and/or alcohol being unsaturated. This formation process is described in more detail in Encyclopedia of Chemical Technology, Third Edition, Kirk-Othmer, Volume 18, pages 575-594.

The water-binding substances suitable for use in the present invention include any of the well known hydraulic materials which have the ability on hydration by water to form solid, relatively insoluble, bonded aggregations having considerable strength and dimensional stability. A binding substance suitable for use in the invention is Type 1 Portland cement specified by ASTM Spec. C-150; however, other water-binding substances may be advantageously used in the invention. These components include portland cements of any ASTM type, quick-setting cement, blast furnace portland cement, mild burnt cement, sulphate-resistent cement, brick cement, gypsum, lime, natural cement, pozzolan cement, calcium sulphate cement and the like. These substances may be used separately or may be mixed together. In addition to the above-materials, there are a multitude of other water-binding substances which may be suitably used in the invention. For a detailed description of such other water-binding substances, see Encyclopedia of Chemical Technology, Third Edition, Kirk-Othmer, Volume 5, pages 163-193.

The catalyst employed in the invention, which is used to cure (cross link) the polymer resin contained in the latex may be any suitable free radical initiator which will catalyze the curing reaction while not interfering with the hydration of the cement material. Catalysts preferred for use in the invention are organic and inorganic peroxides, azo compounds, alkali metal persulfates, ammonium persulfates and mixtures thereof, with the organic peroxides being preferred.

Suitable organic peroxide catalysts include, but are not limited to, benzoyl peroxide, methyl ethyl ketone peroxide, cumene hydroperoxide, di-t-butyl peroxide, acetyl benzoyl peroxide, peracetic acid, cyclohexanone peroxide, cyclohexyl hydroperoxide, 2,4-dichlorobenzoyl peroxide, methyl amyl ketone peroxide, lauryl peroxide and mixtures thereof, with benzoyl peroxide being the most preferred. The catalyst is incorporated in the modified hydraulic material in amounts typically ranging from about .25% to about 5% by weight of the polyester resin to be incorporated in the concrete depending upon the particular catalyst used. For example, benzoyl peroxide is typically used in amounts varying between 0.25% - 5% based on the resin weight; however, if methyl ethyl ketone peroxide is used, the effective amount ranges from about 0.5% to about 2% based on the resin weight. As discussed above, the catalyst may be added to the concrete compositions of the invention as a separate component, but is most preferably combined with a water binding substance to form the hydraulic material used in the invention.

When the concrete composition is cured at room temperature, the catalyst is usually used in combination with accelerators such as organic cobalt salts and/or dimethylaniline or diethylaniline. These accelerators which are usually contained in the latex, induce the generation of free radicals (which initiate the polymerization of the resin) from the catalyst used in the invention at temperatures well below the temperatures which bring about free radical generation when the catalyst is used alone. At curing temperatures above 60°C (140°F) the accelerators are not generally needed. The accelerators when used, are present in the latex in an amounts which ranges from 0.1 wt.% to 0.5 wt.% based on the total resin weight. Promotors, inhibitors, activators and other additives may also be used.

Aggregate suitable for use in the present invention include gravel, sand, stone, crushed rocks, blast furnace slag and the like. In addition, if a lightweight concrete is desired, aggregate such as Perlite®, glass spheres, vermiculite, foamed glass and other organic microshperes may be used. The aggregate particle size may suitably range up to approximately 20mm. The concrete compositions formed by using the lighter aggregate are lightweight and more economical to transport than the compositions using heavier aggregate material.

In addition to the above described components, the concrete compositions of the invention may further comprise fiber reinforcement or filler material. Suitable reinforcement fiber materials include cloth fabric, woven fabric, organic fibers such as those formed from polypropylene, polyester, polyamide, polyacrylonitrile and graphite fibers, and inorganic fibers such as asbestos, glass fiber, steel felt, and the like. Useful filler materials include solid and/or foamed inorganic or organic substances such as wood chips, wood flour, carbon black, expanded clay particles, lava rock, kaolinite, calcium carbonate, metal oxides, corn cob products, asphalt, fly-ash, and the like. These additional components are incorporated into the concrete at any suitable step in the concrete forming process in a sufficient amount such that the ratio of hydraulic material to filler or fiber ranges from about 1:0.1 to about 1:1. It will be clear to one skilled in the art that the list of fillers and fibers given here are but a small fraction of the fillers and fibers suitable for use in the invention and that this list is exemplary only and is therefore not intended to limit the invention.

The selection of these additional components is based upon the particular application to which the concrete compositions formed according to the invention are to be put. For example, adding fiber glass materials provides additional strength, while the wood chips, wood flour, and corn cob materials impart wood-like properties to the present compositions (i.e. they can be sawed and/or nailed.)

A surprising result seen in the concrete compositions formed in accordance with the invention is that the concrete exhibits plastic-like characteristics. It has been found that cementitious articles may be produced from these concretes by extrusion, molding, callandering and the like in a manner similar to that of plastics. This is because the curing reaction in the concrete begins relatively quickly (in approximately 1 to 30 minutes at room temperature) which in turn holds the concrete in the shape in which it was formed by the extruder mold, etc. while the solid mass has an opportunity to harden (i.e. about 20 to about 60 minutes) at room temperature.

Products suitably formed from the paste and concrete compositions of the invention include bearing and cladding panels for high rise building, fire-proof door and window systems, cement slabs, ornamental fascia, refrigerator insulation, swimming pools, railway sleepers, shore and marine protection structures, dome construction, repair or replacement of existing structures, electronic components, coating and sealing materials, moldmaking material for tools or parts requiring close tolerances and the like. While the foregoing list of applications is somewhat extensive, it is merely exemplary and, as such, is not a complete or exhaustive list of the uses to which the paste and concrete compositions of the present invention may be put.

The above described latex and hydraulic material may be made available in many ways. All the components of the invention may be provided at the site of use (e.g. construction site, factory, etc.) and the latex and hydraulic material may be formed from these components and then themselves combined. In the alternative, the latex and hydraulic material, already formed, may be provided in predetermined amounts. For example, a container of latex and a separate bag of hydraulic material may be provided. In this situation, the user would merely combine the latex and hydraulic material as any standard concrete materials would be combined. It will be clear to one skilled in the art that the latex and hydraulic material may also be combined in a transit mix truck (i.e. a concrete mixing truck) or even in the hopper of an extruder.

Preferred embodiments of the present invention are exemplified by the following examples:

### EXAMPLE I

### PREPARATION OF THE LATEX COMPONENT

An unsaturated polyester resin (e.g. Polylite® 33-072 available from Reichhold Chemicals) containing 0.9 wt% dimethyl aniline (an accelerator) was stirred vigorously with an aqueous solution contained 2 wt.% of an emulsifier (e.g. SPAN 30 emulsifier which is made available by ICI, Inc.) and 2.5 wt. % polyvinyl alcohol (a thickening agent). This resulted in a milk-like latex having good stability over long storage times (e.g. 1 to 2 years or more) without experiencing polymerization (curing) of the unsaturated polyester. The polyester resin contained 50 wt% styrene to provide, a crosslinking material. Several such latexes were prepared having the following water-to-polyester ratio by weight:

| Type | Water/Polyester (by weight) |
|------|------------------------------|
| 1 | 0.3/1 |
| 2 | 0.4/1 |
| 3 | 0.5/1 |

These latexes will be referred to as component A.

## EXAMPLE II

### PREPARATION OF THE HYDRAULIC MATERIAL

Type 1 Portland cement specified by ASTM Spec. C-150 was mixed with sand in a ratio of 1:3 by weight such that a homogeneous mixture was formed. This mixture also contained at 1 wt.% benzoyl peroxide based on the weight of the resin used. This mixture will be referred to as component B.

## EXAMPLE III

### FORMATION OF THE POLYMER CONTAINING CONCRETE

One part of component A, Type 1 was admixed with four parts of component B in a Auger mixer Model No. 712 available from Acrison, Inc. Mixing was continued until a completely homogeneous paste was formed. During the mixing, heat was generated due to the exothermic reaction of hydration and polymerization (curing) reactions. The temperature of the paste rose to about $50^{\circ}C$ ($120^{\circ}F$). The paste when completely mixed was poured into a mold and allowed to set. The mixture began to harden in about 20 minutes and in about 30 minutes was completely hardened. The resulting concrete member had the physical properties given in Table I.

The molds used in this and the subsequent examples were as follows: a 4" x 12" x 1/2" mold was used to form a member for tensile testing; a 3" x 6" cylindrical mold was used to form a member for compressive testing; and a 2" x 4" x 12" mold was used to form a member for flexural testing

EXAMPLE IV

POLYMER-CONTAINING CONCRETE USING HIGH TEMPERATURE FORMATION

The paste of EXAMPLE III was found to harden in approximately five (5) minutes when the mold was maintained at a temperature of 80$^{\circ}$C (178$^{\circ}$F). The resulting concrete member had the properties given in Table I.

EXAMPLE V

FORMATION OF REINFORCED POLYMER-CONTAINING CONCRETE

One part of component A, Type 1 was mixed with four parts component B, which further contained 0.5 parts glass fiber, to form a paste. The glass fiber added was comprised of chopped strands 1/4" in length and is available from Owens-Corning as Fiberglass 405. Upon completion of the mixing, the resulting paste was poured into a mold and allowed to harden. The resulting concrete member had the physical properties given in Table I.

EXAMPLE VI

POLYMER-CONTAINING CONCRETE WITH WOOD FLOUR

One part of Component A, Type 3 was admixed with four parts of a hydraulic material containing one part Type 1 Portland cement, one part sand and two parts wood flour. The hydraulic material also contained 1 wt. % benzoyl peroxide based on the weight of the resin used. The wood flour used is available from the Andersons, Ohio, product no. Lite-r-cobs #30. The resulting paste was poured into a mold and allowed to harden. The resulting concrete member which hardened in approximately 40 minutes could be sawed with a conventional wood saw and could have nails driven thereinto. The physical properties of this member are given in Table I.

<div align="center">

EXAMPLE VII

POLYMER-CONTAINING CONCRETE WITH LIGHT-WEIGHT AGGREGATE

</div>

One part Component A, Type 2 was mixed with a three parts of a hydraulic material comprising one part Portland cement and 2 parts light weight hollow microspheres product no. PM 6395 supplied by the PQ Corporation of Pennsylvania. The hydraulic material also contains 1 wt. % benzoyl peroxide based on the weight of the resin used. The resulting paste was poured into a mold and hardened in approximately 60 minutes. The physical properties of the resulting concrete member are given in Table I.

<div align="center">

EXAMPLE VIII

POLYMER-CONTAINING GYPSUM

</div>

One part component A, Type 3 was mixed with four parts of a hydraulic material comprised of one part sand and three parts gypsum plaster known as Plaster of Paris, supplied by Bondex International, Inc. The hydraulic material also contained 1 wt% benzoyl peroxide, based on the weight of the resin used. The resulting paste was poured into a mold and hardened in approximately 60 minutes. The physical properties of the resulting concrete member are given in Table I.

<div align="center">

EXAMPLE IX

EXTRUDED POLYMER-CONTAINING CONCRETE

</div>

The concrete composition of Example III was extruded into pipe form in a standard extruder (e.g. Model #E2020

<div align="center">

-16-

</div>

available from Sterling Extruder Corp., N.J.) having the following parameters:

|  |  |
|---|---|
| Length/Diameter Ratio | 24:1 |
| DC Motor | 20 H.P. |

The operating conditions were as follows:

|  |  |
|---|---|
| Screw Speed | 30 R.P.M. |
| Cylinder Temperatures: | |
| Feed Section | Room Temp. |
| Compression Section | $30-40^{\circ}C$ |
| Metering Section | $40-50^{\circ}C$ |
| Die Temperature | $60-80^{\circ}C$ |

The resulting pipe which was produced at a rate of 45 meters/hr and had a diameter of 225 mm O.D., 200 mm I.D. exhibited properties comparable to those see with Example III.

### EXAMPLE X - COMPARISON

A polymer containing concrete formed in accordance with the present invention was compared with a conventional concrete composition, as well as, thermoplastic (i.e., styrene-butadiene, Saran resin, acrylic and polyvinyl acetate) containing concrete compositions. The results are given in Table II. Each material had a sand to cement ratio of approximately 3 to 1; a polymer to cement ratio (where a polymer was used) of approximately 0.2 to 1. Each composition was cured for 28 days at 50% rh (relative humidity) prior to testing. The cement used was Type 1 Portland cement as specified by ASTM Spec. C-150. The control was prepared in a conventional manner. The thermoplastic containing concretes were prepared by adding the polymer to the cement/water mixture and allowing the mixture to set. The composition of the present invention was prepared by mixing an aqueous latex

-17-

comprising an unsaturated polyester resin (the polyester containing 0.1 wt. % dimethylaniline) and 2 wt. % SPAN 80 emulsifier with a Portland cement containing mixture which comprised 2 wt.% benzoyl peroxide based on the weight of the resin used. It can be seen that the concrete compositions of the present invention performed substantially better than conventional concrete as well as the thermoplastic containing concretes.

TABLE I

EXAMPLE

|  | III | IV | V | VI | VII | VIII |
|---|---|---|---|---|---|---|
| compressive[1] Strength (psi) | 8,000 | 12,000 | 15,000 | 6,000 | 3,500 | 2,000 |
| Flexural[1] Strength (psi) | 5,000 | 7,000 | 8,500 | 4,000 | 1,500 | 600 |
| Tensile[2] Strength (psi) | 1,200 | 1,500 | 3,500 | 1,200 | 500 | 200 |
| Specifc Gravity | 1.9 | 1.9 | 2.0 | 1.4 | 1.1 | 2.1 |

TABLE II

|  | CONTROL | STYRENE-BUTADIENE | SARAN | ACRYLIC | PVAc | PRESENT INVENTION |
|---|---|---|---|---|---|---|
| Compressive[1] strength (psi) | 4,500 | 4,800 | 8,430 | 5,690 | 3,700 | 12,000 |
| Tensile[2] strength (psi) | 345 | 725 | 910 | 855 | 700 | 1,500 |
| Flexural[1] strength (psi) | 715 | 1,580 | 1,820 | 1,835 | 1,840 | 7,000 |

[1] measured by a 400 KIP Universal Hydraulic Compression machine (Soil Test, Inc., ILL.).

[2] measured by a 110 KIP MTS Closed Loop Testing Machine (MTS Systems Corp., Minn.)

CLAIMS

1.    A latex suitable for admixing with a hydraulic material to form a thermosetting polymer-containing concrete comprising an aqueous emulsion of an unsaturated polyester resin.

2.    A latex according to claim 1 in which the resin has a viscosity of from about 50 to about 1500 centipoise measured at 25°C and a specific gravity of from about 1.1 to about 1.4.

3.    A latex according to claim 1 or claim 2 in which the thermosetting polyester resin comprises a thermosetting unsaturated linear polyester polymer admixed with a vinyl monomer having a polymer to monomer weight ratio of from about 1:0.5 to about 1:2.

4.    A latex according to claim 3 in which the vinyl monomer is selected from styrene, acrylonitrile, and methylmethacrylate and mixtures thereof.

5.    A latex according to any one of claims 1 to 4 further comprising an effective amount of an emulsifier and from about 0.1 wt.% to about 0.5 wt.% of the total resin weight of an accelerator.

6.    A latex according to claim 5 wherein the accelerator is selected from organic cobalt salts, dimethylaniline, diethylaniline and mixtures thereof.

7. A latex according to any one of claims 1 to 6 wherein the water-to-resin ratio is from about 0.1:1 to about 1:1 by weight.

8. A latex according to claim 7 wherein the water-to-resin ratio is about 0.2:1 to about 0.9:1 by weight.

9. A hydraulic material for use in combination with a thermosetting unsaturated polyester resin-containing latex to form a concrete containing a thermosetting polymer, the hydraulic material comprising a water binding substance admixed with a catalyst, the catalyst being adapted to promote polymerization of the polyester resin in the latex.

10. A hydraulic material according to claim 9 in which the catalyst is a free radical generating organic peroxide in an amount ranging from about 0.25 wt.% to about 5.0 wt.% of the resin content of the concrete.

11. A hydraulic material of claim 10 in which the catalyst is benzoyl peroxide.

12. A hydraulic material according to any one of claims 9 to 11 in which the water-binding substance has the ability to upon hydration to a form a solid, relatively insoluble, bonded aggregation having dimensional stability.

13. A hydraulic material according to any one of claims 9 to 12 in which the water binding substance is selected from Portland cement, lime, gypsum and mixtures thereof.

14. A concrete material comprising a latex mixed with a water-binding substance and a catalyst, in which the latex is formed of an unsaturated polyester resin and water, the catalyst being adapted to promote polymerisation of the polyester resin.

15. A concrete material comprising a latex according to any one of claims 1 to 8 and a hydraulic material according to any one of claims 9 to 13.

16. A concrete material according to claim 14 or claim 15 comprising the water-binding substance and the latex in a weight ratio of from about 1:1 to 2:1.

17. A concrete material according to any one of claims 14 to 16 further comprising an aggregate material in which the composition of the concrete is about 1 part water binding substance, from about 0.2 to about 1.0 part latex, and up to about 8 parts aggregate by weight.

18. A concrete material according to claim 17 wherein the aggregate is selected from sand, gravel, stone, crushed rock, furnace slag, and mixtures thereof.

19. A concrete material according to any one of claims 14 to 18 further comprising a filler material.

20. A concrete material according to claim 19 wherein the filler material is selected from woodchips, corn cob products, wood flour, expanded clay particles, lava rock, asphalt, carbon black, Kaolinite, calcium carbonate, metal oxides, fly-ash and mixtures thereof.

21. A concrete material according to any one of claims 14 to 20 further comprising a fiber reinforcing material.

22. A concrete material according to claim 21 wherein the fiber is selected from polypropylene, polyester, polyamide and polyacrylonitrile fibers, graphite filaments, asbestos, glassfiber, steel felt, cloth fabric, woven fabric, and mixtures thereof.

23. A hardened concrete material comprising the reaction product of a concrete according to any one of claims 14 to 22.

24. A method of producing a hardened concrete comprising the steps of:

(a) producing an aqueous latex by admixing water and a thermosetting unsaturated polyester resin in a weight ratio of from about 0.1:1 to about 1:1 and an emulsifier;

(b) producing a concrete material by admixing the latex with a water binding substance in a weight ratio of from about 0.1:1 to about 1:2 and from about 0.25% to about 5% by weight of the resin weight of a catalyst adapted to promote polymerization of the resin;

(c) forming the concrete material into a desired shape; and

(d) allowing the shaped concrete material to harden and cure.

25. A method according to claim 24 further comprising the step of admixing the catalyst and water binding substance to form a hydraulic material prior to admixture with the latex in step (b).

26. A method according to claim 24 or claim 25 further comprising the step of admixing the concrete material with an aggregate material prior to forming the concrete in step (c), the concrete material having a composition of about 1 part water binding substance, from about 0.2 to about 1.0 part latex and up to about 8 parts aggregate.

27. A method according to any one of claims 24 to 26 in which the forming step (c) is accomplished by extruding the concrete material.

28. A hard flexible concrete material formed by curing and setting a concrete composition comprising a mixture of an unsaturated polyester resin containing aqueous latex emulsion and a catalyst containing hydraulic material, the concrete composition including a hydrated water binding substance and a polyester resin, the resin being crosslinked into a three dimensional matrix within the concrete, the weight ratio of the water binding substance to resin being from about 11:1 to about 4:1.